# EUROPEAN PATENT APPLICATION

(11) **EP 4 502 364 A1**
(43) Date of publication of application: **05.02.2025**
(21) Application number: 23398019.2
(22) Date of filing: 03.08.2023
(51) Int. Cl.: F03D 1/06

(54) **BLADE FOR A WIND TURBINE, WIND TURBINE AND METHOD FOR MANUFACTURING**

(71) Applicant: Siemens Gamesa Renewable Energy A/S, 7330 Brande (DK)
(72) Inventor: Sousa de Borba Oliveira, Carolina, 3800-110 Aveiro (PT); Previtali, Francesco, 22453 Hamburg (DE)
(74) Representative: SGRE-Association

(57) **Abstract**

A blade (3) for a wind turbine (1), comprising:
an inboard section (7);
an outboard section (8); and
joints (9) connecting the inboard section (7) and the outboard section (8) to each other, each joint (9) including:
a first insert (16) attached to the inboard section (7) ;
a second insert (17) attached to the outboard section (8), the first and second insert (16, 17) defining together a convex shape away from the blade (3) when seen in a cross-section along the lengthwise direction (11) of the blade (3); and
a threaded connection means (24) connecting the first and second insert (16, 17) to each other, the threaded connection means (24) being configured to be tightened from outside of the blade (3).

Advantageously, the connection thus formed is well suited to counteract blade loads and easy to access which simplifies assembly/disassembly and allows visual inspection of the screws.

## Description

The present invention relates to a wind turbine, to a wind turbine and to a method for manufacturing a blade or a wind turbine.

New wind turbines require blade designs with longer span and chord so as to increase the annual engine production. However, larger blades face logistic barriers, both in transportation and manufacturing.

The production of segmented blades comes as a solution. In order to ensure the connection between the outboard and inboard blade parts, there is a necessity to develop joining technologies. General requirements regarding such joining technologies are that they can be incorporated into the manufacturing process, have a moderate impact on the overall weight of the blade and facilitate the assembly or disassembly process.

US 2011/0293432 A1 discloses ways of fastening two blade sections to each other. One of the blade sections defines internally threaded bores adapted to receive the threaded outer surface of the bolts. When the two blade sections abut each other and the bolts are screwed into the internally threaded bores of the blade section, the blade sections are fastened to each other.

US 2014/0334934 A1 discloses a connecting device coupling a rotor blade inner part and a rotor blade outer part together. The connecting device includes an anchoring element anchored in the rotor blade outer part, a counter-part element anchored in the rotor blade inner part, and a connecting bolt extending through the counter-part element and fixed to the anchoring element.

Further, US 2022/0228554 A1 discloses connecting a first rotor blade segment to a second rotor blade segment. To this end, each segment comprises a mounting sleeve having an internal thread. A respective connecting bolt engages the threads of axially aligned mounting sleeves in the first and second rotor blade segment so as to couple the first and second segment together.

It is one object of the present invention to provide an improved joining technology for a wind turbine blade.

According to a first aspect, a blade for a wind turbine is provided. The blade comprises:
an inboard section;
an outboard section; and
joints connecting the inboard section and the outboard section to each other, each joint including:
   a first insert attached to the inboard section;
   a second insert attached to the outboard section, the first and second insert defining together a convex shape away from the blade when seen in a cross-section along the lengthwise direction of the blade; and
   a threaded connection means connecting the first and second insert to each other, the threaded connection means being configured to be tightened from outside of the blade.

The inserts on the inboard and outboard section provide the advantage of a sturdy connection and avoids critical loads in the inboard and/or outboard section, particularly in a case where the inboard and/or outboard section comprises a fiber reinforced material. Further, a load transfer from the threaded connection means to the blade shell is improved.

The convex shape defined by the first and second insert provides the advantage that the thickness of a material of the inboard and outboard section substantially does not need to be increased. Rather, the additional material to provide the convex shape comes from the first and second insert. The convex shape allows for the provision of the threaded connection means in a place that can be easily reached from outside the blade and thus be tightened from such a position. It also simplifies the assembly/disassembly process and may allow for visual inspection of the threaded connecting means.

The blade may be part of the rotor of the wind turbine. A wind turbine is an apparatus to convert the wind's kinetic energy into electrical energy. The wind turbine comprises, for example, the rotor having two or more blades connected to a hub, a nacelle including a generator, and a tower holding, at its top end, the nacelle.

The blade, for example, at its root section is fixedly or rotatably connectable or connected to the hub. The blade comprises, for example, a pressure side (upwind side) and a suction side (downwind side). The pressure side and the suction side are connected with each other at a leading edge and a trailing edge. The pressure and suction sides and the leading and trailing edges define an airfoil of the blade.

The inboard section may comprise a root section or an intermediate section of the blade. The outboard section may comprise the blade tip. One or each of the inboard and outboard section may comprise a fiber-reinforced material. The fibers may comprise glass fibers, carbon fibers and/or aramid fibers. The inboard and/or outboard section may each be manufactured by arranging a fiber layup in one or more, in particular separate, molds, infusing the fiber layup with resin, and curing the resin. The resin may be infused into the fiber layup in a vacuum-assisted manner. For example, the fiber layup is covered with one or more vacuum bags and the vacuum is generated in a space covered by the vacuum bag. The resin is then infused into the space due to the generated vacuum, and is, thus, wetting the fibers. The resin includes, for example, thermosets, thermoplastics, epoxy, polyurethane, vinyl ester and/or polyester. The resin is, for example, cured by applying heat. The result is a fiber-reinforced resin laminate. One or more mandrels may be used in one or more molds for manufacturing the inboard and/or outboard section with a hollow cross-section.

The inboard and outboard section are preferably connected in a longitudinal direction to each other at the joint. The inboard and the outboard section may have a cross-section, in particular adjacent to the joints, defining an airfoil profile. The profile has an outside surface defining a pressure side, a suction side, a leading edge and a trailing edge. On the inside, the airfoil profile may be hollow or filled with a foam or another filling material. In particular, the airfoil profile may be defined by an upper and a lower shell bonded together to form the (closed) airfoil profile. Alternatively, the airfoil profile is formed integrally, wherein a fiber layup is arranged in a lower mold, a mandrel is placed on top of the fiber layup in the lower mold, a fiber layup is placed on top of the mandrel, an upper mold is placed on the fiber layup on the mandrel, and, finally, the fiber material is infused with a resin which is then cured.

The inboard and the outboard section may each comprise a spar cap, extending in the longitudinal direction of a blade. The first and second insert may be arranged adjacent to the spar cap.

The first and second inserts (the same applies to the third and fourth insert which are mentioned later on) may comprise or consist of metals such as steel, aluminum, titanium and alloys of these materials, metal composites or plastics. The first and second insert may be CNC-machined (for example milled) to provide the convex shape. The inserts may be fitted into a recess of the inboard and outboard section without an air gap being present. The inserts may be attached to the inboard and outboard section by adhesive bonding (in particular, exclusively by adhesive bonding). For example, the bond is provided by resin which is applied or infused between the insert and the shell. Thus, according to an embodiment, the first and second inserts are provided in a respective mold for manufacturing the inboard and outboard section together with a respective layup for the inboard and outboard section. Then, resin is infused into the respective fiber layup, wherein said resin is also coming into contact with the first and second inserts. The resin is cured to firmly connect the first and second inserts with the respective fiber layup. According to another embodiment, the inboard and outboard section are first each manufactured, for example in a resin infusion process. Once hardened, the first and second insert are inserted into a recess or pocket formed on the inboard and/or outboard section and connected thereto using glue or other manufacturing technology, for example rivets, screws etc.

A "convex shape" is herein understood to mean a shape comprised of one or more lines and/or curves, the shape extending and/or bulging away from a center of the blade when seen in a cross-section along the lengthwise direction of the blade. The shape may have a height gradually increasing in a direction towards the parting plane between the inboard and the outboard section at the joints. The height may be defined as the distance along a line perpendicular to a chordal plane of the inboard and/or outboard section. The chordal plane may be arranged so as to intersect the trailing and the leading edge of the inboard and/or outboard section. The distance is then measured from said chordal plane to a point on the outside surface of the convex shape.

The threaded connection is configured to be tightened from the outside of the blade. This means that the threaded connection means can be accessed with a tool from outside the blade. This means, in particular, that the inside of the airfoil profile does not need to be reached. This makes the present solution particularly suitable for inboard and/or outboard sections with a small height. Tightening in particular involves applying a torque to the threaded connection means. According to an embodiment, the threaded connection means is tightened by applying a torque around an axis. Said axis preferably lies outside an airfoil profile defined by the inboard and/or outboard section at a lengthwise position away from the joints.

In one embodiment, during installation of the blade, the threaded connection means is inserted from outside of the blade. As an alternative, it can be pre-installed with the first or second insert. For example, the connection means may be partially covered by the outer shell, in particular laminate, leaving an opening only for the fastening tool. In particular, a size of the opening may be smaller than a size of the threaded connection means (diameter of the screw head or diameter of the nut). The opening may be covered or sealed (in particular for avoiding water or dirt ingress and/or to prevent corrosion) by a cap or cover made, e.g., of plastics.

According to an embodiment, the first insert is sandwiched between an inner and outer layer of the inboard section and/or wherein the second insert is sandwiched between an inner and outer layer of the outboard section.

Thereby, the inserts can be easily integrated into the inboard and/or outboard section. The inner and/or outer layer of the inboard and/or outboard section may be comprised of one or more plies of fiber material, respectively. The height (thickness) of the inner and outer layer may be the same, thus leading to a preferable flow of forces. Typically, multiple inner and outer layers are provided, forming an inner and outer laminate.

According to a further embodiment, the inner layers of the inboard and outboard section extend along a straight line and/or wherein the outer layers of the inboard and outboard section extend along a curve.

The curve may correspond to the convex shape of the first and second insert. Again, these measures result in a preferable flow of forces.

According to an embodiment, the inboard or outboard section has an opening on its outside surface for accessing the threaded connection means for tightening the same.

Preferably, the opening is formed in the outer layer of the inboard or outboard section, preferably comprising a fiber layup. The opening may be formed as a hole. The opening may have a cylindrical shape. An axis of the opening (in particular of the cylindrical shape) may be orientated parallel to the lengthwise direction of the plate.

According to an embodiment, the threaded connection means is a screw or a nut and/or wherein one of the first and second insert has a through-hole and/or the other one has a threaded hole or a stud.

The screw preferably reaches through the through-hole and is threaded into the threaded hole. The stud preferably extends through the through-hole and is fastened using the nut.

According to an embodiment, the threaded connection means is directly connected to the first and second insert.

This embodiment advantageously avoids any intermediate elements in the connection. By not having an intermediate element, for example a fitting, the load transfer is improved, especially concerning shear loads and bending loads.

For example, the screw head has direct contact with the other one of the first and second insert, and the screw shaft is directly screwed into the one of the first and the second insert. When a stud is used, the stud is integrally formed (i.e., as a single piece) with the other one of the first and second insert. The stud reaches through the through-hole in the one of the first and second insert. The nut is then in direct connection with the stud (being part of the other one of the first and second insert) and the one of the first and second insert against which the nut presses.

According to an embodiment, the first and second insert abut in the lengthwise direction of the blade.

This results in a preferable flow of forces.

According to a further embodiment, the blade has a blade length, wherein the joint is arranged in the outermost 70%, 50% or 30% of the blade length.

The blade length is preferably measured from the root end of the blade to the tip end of the blade. Typically, the blade has a small cross-section in the outermost 70%, 50% or 30% which makes it preferable to access the threaded connection means from the outside of the blade, with little space being available inside the blade (inside the airfoil profile).

According to a further embodiment, the blade comprises further joints, each further joint including:
a third insert attached to the inboard section opposite the first insert;
a fourth insert attached to the outboard section opposite the second insert, the third and fourth insert defining together a convex shape towards the blade when seen in the cross-section along the lengthwise direction of the blade; and
a threaded connection means connecting the third and fourth insert to each other, the threaded connection means being configured to be tightened from inside of the blade.

The arrangement of a third and fourth insert may be opposite with respect a portion of the airfoil profile and/or the inner layer of the inboard or outboard section. In this way, a symmetry is provided which counteracts bending moments acting on the blade. "Towards the blade" preferably means a direction towards a blade inner surface or center of the blade.

According to a further embodiment, the first and second insert abut each other forming an angle in between in an untightened state of the threaded connection means.

This is another way of counteracting bending moments acting on the blade. By way of the angle, an additional moment is created. Once the threaded connection means has been tightened, the abutting surfaces of the first and second insert are elastically deformed and the angle (air gap) vanishes, preferably.

According to a further embodiment, a parting plane of the inboard and outboard section of the joint runs through or is adjacent to a rib reinforcing the inboard and/or outboard section.

Again, also by way of this embodiment, bending moments acting on the blade can be resisted in a preferred way.

According to a further embodiment, respective threaded connection means of the joints are tightened from opposite sides of a parting plane at the joints, or from the same side.

Having the threaded connection means being tightened from opposite sides has an advantage in terms of symmetry when counteracting bending moments acting on the blade.

According to a further embodiment, multiple first and/or second inserts are arranged side by side along the airfoil profile of the inboard and outboard section, wherein preferably non-metal spacers are arranged between each pair of adjacent first and/or second inserts.

For example, the non-metal spacers can be made from pultruded fiber material. This allows to account for the curvature of the airfoil profile without having to add additional metal components, thus saving weight.

According to an embodiment, at the joint, only the first and second insert are in direct contact with each other; the inner and outer layer of the inboard and outboard section are spaced apart from each other by a gap and are not in contact with each other.

According to an embodiment, the screws or studs point in alternating directions along the chordwise direction of the blade.

According to a second aspect, a wind turbine is provided, the wind turbine comprising the blade as described above.

According to a third aspect, a method for manufacturing a blade as described above or a wind turbine as described above is provided. The method comprises the steps:
a) attaching the first insert to the inboard section;
b) attaching the second insert to the outboard section; and
c) connecting the first and second insert to each other by tightening the threaded connection means from outside of the blade.

"Attaching" here covers different embodiments, e.g.: The inserts may be embedded (co-infused) at the time of infusing a fiber layup of the inboard and outboard section with resin. Or, the inboard and outboard sections are manufactured with corresponding recesses. Once manufactured (e.g., once a fiber layup of the inboard and outboard sections has been infused with resin and cured), the inserts are bonded into the recesses (or otherwise connected thereto).

Embodiments and features described with reference to the first aspect apply, mutatis mutandis, to the second and third aspect, and vice versa.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

Further embodiments, features and advantages of the present invention will become apparent from the subsequent description and dependent claims, taken in conjunction with the accompanying drawings, in which:
Fig. 1 shows, in a perspective view, a wind turbine according to an embodiment;
Fig. 2 shows, in a perspective view, a portion of a blade according to an embodiment;
Fig. 3 shows a lengthwise section III-III from Fig. 2;
Fig. 4 shows a cross-section IV-IV taken from Fig. 2;
Fig. 5 shows a perspective detailed view V from Fig. 2;
Fig. 6 shows the lengthwise section of Fig. 3 according to a further embodiment;
Fig. 7 shows the cross-section of Fig. 4 according to a further embodiment;
Fig. 8 shows a joint with the first and second metal insert in an abutting relationship, with an angle in between;
Fig. 9 shows a portion of a blade with two enforcing ribs adjacent to respective joints;
Figs. 10 - 12 show, in a top view and schematically, different arrangement of screws;
Fig. 13 to Fig. 17 show different embodiments of a first and second metal insert forming a convex shape;
Fig. 18 shows a detail view XVIII taken from Fig. 4; and
Fig. 19 shows a flowchart of a method for manufacturing the blade according to an embodiment.

In the Figures, like reference numerals designate like or functionally equivalent elements, unless otherwise indicated.

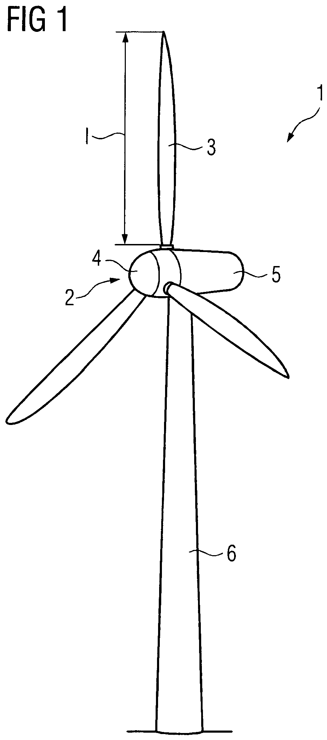

Fig. 1 shows a wind turbine 1 according to an embodiment. The wind turbine 1 comprises a rotor 2 having two or more blades 3 connected to a hub 4. The hub 4 is connected to a generator (not shown) arranged inside a nacelle 5. During operation of the wind turbine 1, the blades 3 are driven by wind to rotate and the wind's kinetic energy is converted into electrical energy by the generator in the nacelle 5. The nacelle 5 is arranged in the upper end of a tower 6 of the wind turbine 1. The tower may be connected to a monopile or concrete foundation in the ground or sea bed.

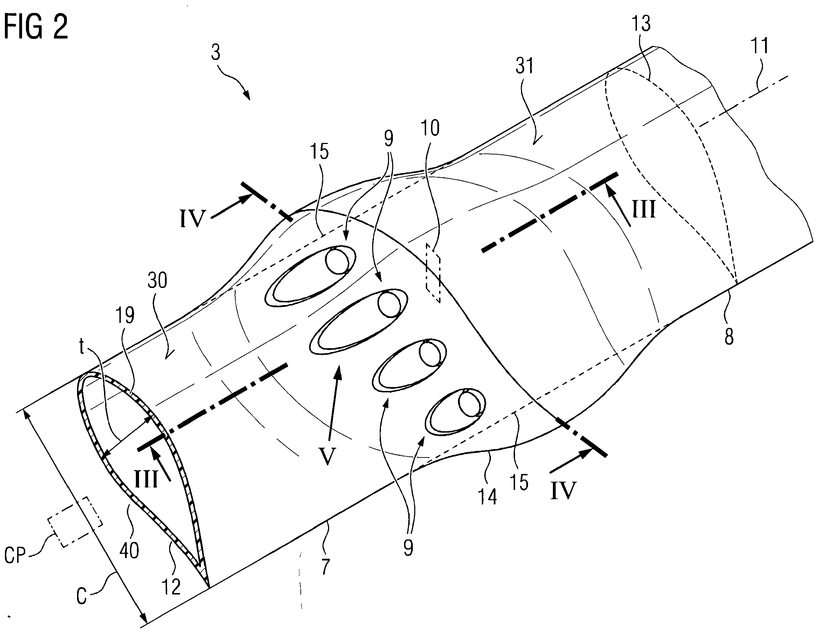

Fig. 2 shows a perspective view of a portion of a blade 3 of Fig. 1. The blade 3 has an inboard section 7 and an outboard 8. The inboard section 7 may comprise the blade root (not shown) connected to the hub 4 (see Fig. 1). The outboard section 8 may comprise a blade tip (not shown). The inboard and the outboard section 7, 8 are joined to each other by multiple joints 9. A parting plane where the inboard and outboard section 7, 8 are separable from each other is indicated with reference numeral 10 in Fig. 2. The inboard and the outboard section 7, 8 are joined to each other in the lengthwise direction 11 of the blade 3. The parting plane 10 is orientated perpendicularly with respect to the lengthwise direction 11.

Each of the inboard section 7 and the outboard section 8 has an airfoil profile 12, 13. A portion of the blade 3 has been cut away to reveal the view on the airfoil profile 12. The airfoil profile 13 is indicated with a dashed (hidden) line. The explanations that follow with regard to the airfoil profile 12 equally apply to the airfoil profile 13, unless stated otherwise. The airfoil profile 12 is comprised of a pressure side, a suction side, a leading edge and a trailing edge. The chord c is the distance between the trailing edge and the leading edge. The thickness t is the maximum height of the blade and represents the maximum distance between the pressure and the suction side.

The airfoil profiles 12, 13 each have a chord c and a thickness t which gradually decreases in the lengthwise direction 11, i.e., in the direction towards the tip of the blade. However, at least a height t, but also the chord width c may increase in a region adjacent to the parting plane 10 on both, the inboard and the outboard section 7, 8. This region is indicated with reference numeral 14 and is a region of locally increased cross-section to accommodate the joints 9. In one embodiment, there is only the blade height t, which increases towards the parting plane 10, but the chord c keeps on decreasing towards the parting plane 10 (for the inboard section 7) and decreases even further in a direction away from the parting plane 10 (for the outboard section 8). This second embodiment is merely indicated by dashed lines 15, whereas the first embodiment is shown in solid lines in Fig. 2.

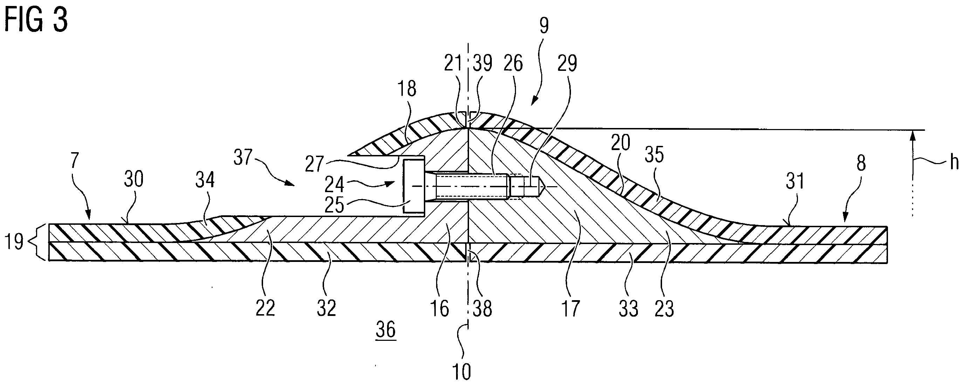

Fig. 3 shows a lengthwise section III-III from Fig. 2. The section view cuts through the outer surfaces 30, 31 in Fig. 2 which may be any one of the suction or pressure surfaces of the blade 3. The section also cuts through one of the joints 9.

The joint 9 includes a first and a second metal insert 16, 17. The first and second insert 16, 17 may also be made of a different material such as a metal composite or plastics. The first metal insert 16 is attached to the inboard section 7 and the second metal insert 17 is attached to the outboard section 8. The first metal insert 16 may be arranged inside a recess 18 formed in the pressure side airfoil profile 19 of the inboard section 7. The second metal insert 17 is arranged in a recess 20 formed in the pressure side airfoil profile 19 of the outboard section 8. The shape of the recesses 18, 20 conforms to a convex shape defined by the first and second metal insert 16, 17. The convex shape in this case corresponds to a peak 21 (maximum distance h - Fig. 2 - to the cordal plane CP in Fig. 2) at the parting plane 10 which tapers off on both sides to form triangular shapes 22, 23 at either end of the metal inserts 16, 17.

The metal inserts 16, 17 are connected to each other by a threaded connection means which in the case of Fig. 3 is a screw 24. The screw 24 has a screw head 25 and a threaded shank 26. The threaded shank 26 is screwed into a threaded hole formed inside the second metal insert 17. The screw head 25 engages the first metal insert 16. The screw head 25 may be arranged inside a pocket 27 formed inside the first metal insert 16. The screw head 25 may be provided with a recess 28 on its center line 29 for attaching thereto a tool, such as a screwdriver for screwing the threaded shank 26 into the corresponding hole. The central axis 29 may be arranged to extend above and parallel to an outer surface 30, 31 of the pressure-side airfoil profile 19.

In one embodiment, the recesses 18, 20 are formed by the respective laminate (resin-infused fiber material) making up the pressure-side airfoil profile 19. Said laminate is split into an inner layer 32, 33 and an outer layer 34, 35. The inner layer 32 and the outer layer 34 of the inboard section 7 sandwich therebetween the metal insert 16. The inner layer 33 and the outer layer 35 of the outboard section 8 sandwich therebetween the second metal insert 17.

As can be seen in Fig. 3, the inner layers 32, 33 which border on an inner volume 36 enclosed by the airfoil profiles 12, 13 extend in a straight line, whereas the outer layers 34, 35 extend along a curve.

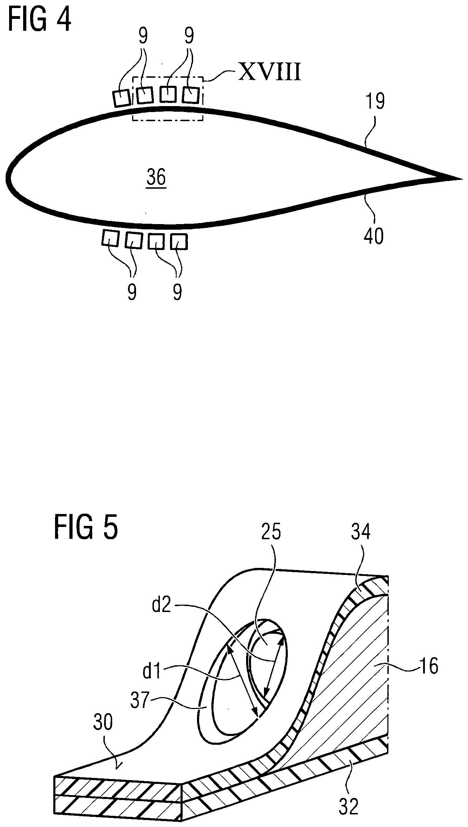

As can be seen from Fig. 5, which is a view V from Fig. 2, the outer layer 34 may have an opening (in this case a hole) formed therein to give access to the screw 24, in particular to the screw head 25. The opening 37 may have, for example, an oval or circular shape. The diameter d1 of the opening 37 may be smaller than the diameter d2 of the screw head 25, just large enough to allow a tool, for example a screwdriver, to pass through in order to tighten the screw 24.

Returning to Fig. 3, it can be seen that it is the screw 24 that directly connects to the metal inserts 16, 17. No intermediate elements are required for connection. The metal inserts 16, 17 may directly abut against each other. On the other hand, there may be a gap 38, 39 formed between the inner layers 32, 33, and the outer layers 34, 35, respectively.

By way of the configuration of Fig. 3 and 5, the screw head 25 can be easily accessed by moving a tool, such as a screwdriver, in a direction parallel to the outer surface 30. Advantageously, the additional material required to provide this accessibility of the screws 24 is provided by way of the material of the metal inserts 16, 17. No additional laminate needs to be provided. The inner layer 32 and the outer layer 35 may have the same or approximately the same thickness. The same applies to the inner and outer layers 33, 35 of the outboard section 8.

This arrangement is particularly useful in the outermost 70, 50 or 30% of the blade length l (measured from the root to the tip of the blade, see Fig. 1) where the blade height t is so small that a connection on the inside of the blade, i.e., within the inner volume 36, cannot or cannot reasonably be made.

Fig. 4 illustrates the cross-section IV-IV from Fig. 2 in a schematic manner. For example, the joining region 14 (see Fig. 2) may comprise a number of, for example four or more, joints 9 on the outside of the pressure side airfoil profile 19. Further, a number of, for example four or more, joints 9 are provided on the outside of the suction side airfoil profile 40.

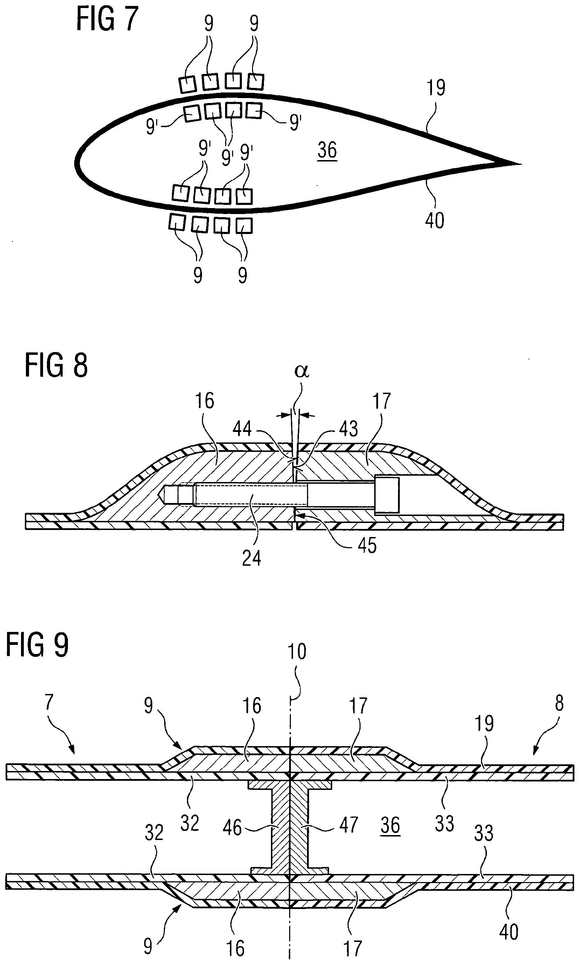

In some cases, it may be desirable to reinforce the joining region even more. This is schematically illustrated in Fig. 7 which shows that, in addition to the joints 9 of Fig. 4, further joints 9' are provided. For example, a number, for example four or more, joints 9' are provided on the inside of the pressure side airfoil profile 19, i.e., inside the inner volume 36, and a number of, for example four or more, joints 9' are provided on the inside of the suction side airfoil profile 40, i.e., also within the inner volume 36. The inner joints 9' can be arranged opposite respective outer joints 9, wherein the line of symmetry between each of pair of joints 9, 9' may be defined by the pressure side airfoil profile 19 and the suction side airfoil profile 40.

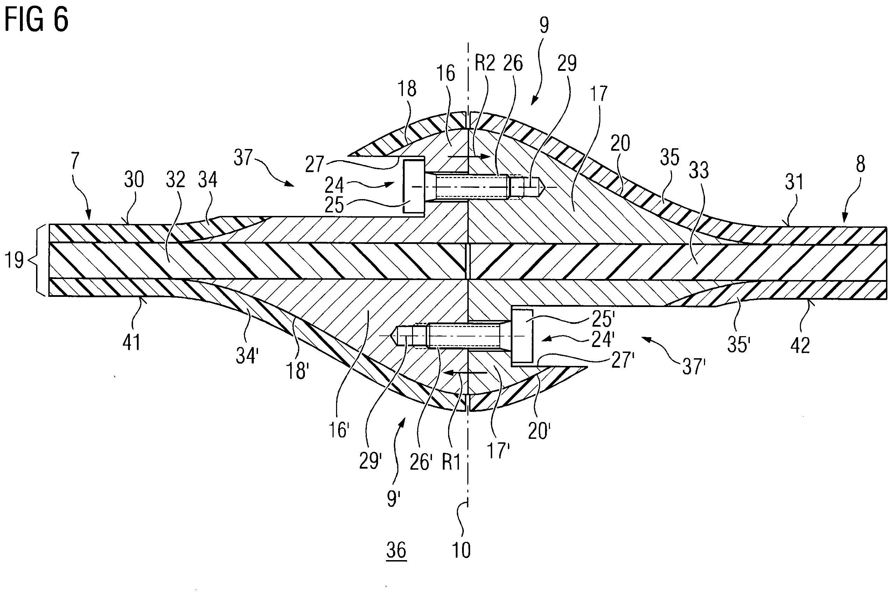

In this case, a lengthwise section through one of the pairs of joints 9, 9' in Fig. 7 may look as illustrated in Fig. 6. Elements corresponding between Fig. 6 and Fig. 3 are indicated by "'". A third metal insert 16' and a fourth metal insert 17' (which may also be made of a different material as explained for the inserts 16, 17 above) defining a convex shape towards the blade 3, i.e., into the inner volume 36, are provided. The insert 16' is arranged in a recess 18' formed between the inner layer 32 and the outer layer 34' ("outer" in this case referring to the layer 32 arranged at an inner position). Further, the metal insert 17' is arranged inside a recess 20' formed between the inner layer 33 and the outer layer 35'. The central access 29' of the screw 24' (around which the screw 24' is turned to tighten the same and thereby connect the metal inserts 16', 17' to each other) may be arranged parallel and below inner surfaces 41, 42 of the pressure side airfoil 19 facing towards the inner volume 36. Further, the direction of insertion of the screws 24, 24' may be in opposite directions R1, R2. To this end, the threaded shaft 26' of the screws 24' is screwed into a threaded hole in the third metal insert 16' and the bold head 25' engages the fourth metal insert 17'. Also, an opening 37' to access the screw 24' for tightening the same is arranged on the other side 35' of the parting plane 10 as compared to the opening 37.

Fig. 8 illustrates an embodiment with abutting surfaces 43, 44 of the first metal insert 16 and the second metal insert 17 arranged at an angle α in an untightened state of the screw 24. Once the screw 24 is properly tightened, the abutting surfaces 43, 44 form a high-pressure zone 45 at a position closer to the center of the blade 3, which counteracts bending moments acting on the blade 3. In this, the abutting surfaces 43, 44 are deformed such that the angle (forming an airgap) vanishes, i.e., is not visible anymore.

Fig. 9 illustrates an embodiment, where ribs (one or more), for example stringers, are arranged in the inner volume 36 adjacent to the parting plane 10. The ribs 46, 47 may be connected to the inboard portion 7 and the outboard portion 8. In particular, the rib 46 may be connected to the inner layers 32 of the pressure side airfoil profile 19 and the suction side airfoil profile 40. Similarly, the rib 47 may be connected to the inner layers 33 of the pressure side airfoil profile 19 and the suction side airfoil profile 40.

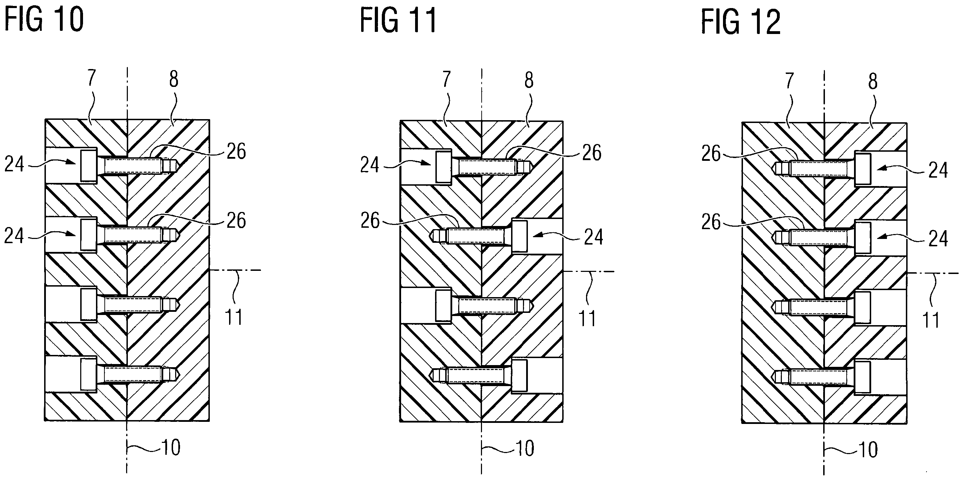

Figs. 10 - 12 illustrate different arrangements of the screws 24. Figs. 10 - 12 each show, in a schematic top view, the inboard and outboard section 7, 8 with the lengthwise direction being indicated by reference numeral 11. In Fig. 10, the screws 24 all extend with the threaded portion 26 towards the tip of the blade 3. In Fig. 11, the screws 24 point, with their threaded portions 26, alternatingly towards the tip of the blade 3 and towards the root of the blade 3. In Fig. 12, the threaded portions of the screws 26 all point towards the root of the blade. The screws 24 in Figs. 10 - 12 are all lined up along the parting line 10.

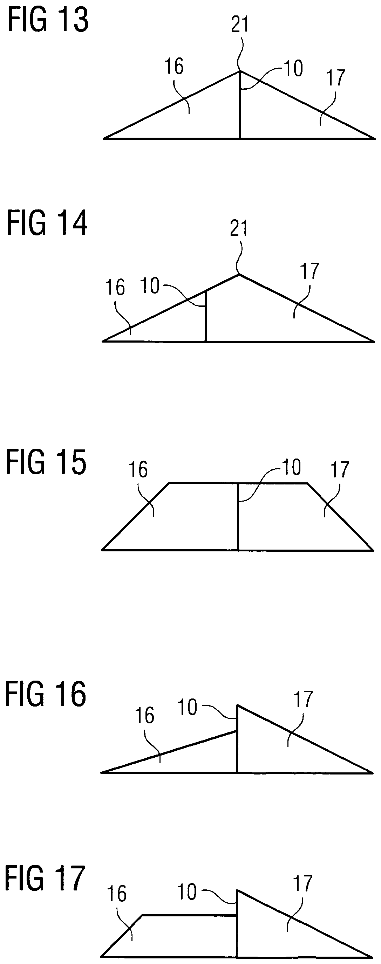

Fig. 13 - 17 illustrate examples of different convex shapes (as seen in the chordwise direction) formed by each pair of metal inserts 16, 17.

In Fig. 13, the metal inserts 16, 17 are formed of right-angled triangles with the parting line 10 passing through the peak 21.

In the example of Fig. 14, the parting plane 10 is shifted sideways compared to Fig. 13.

Fig. 15 shows metal inserts 16, 17 of (optionally) equal size, each having a trapezoidal shape.

Fig. 16 illustrates metal inserts 16, 17 configured as right-angled triangles with different heights.

Fig. 17 illustrates a metal insert 16 in a trapezoidal shape and a metal insert 17 as a right-angled triangle.

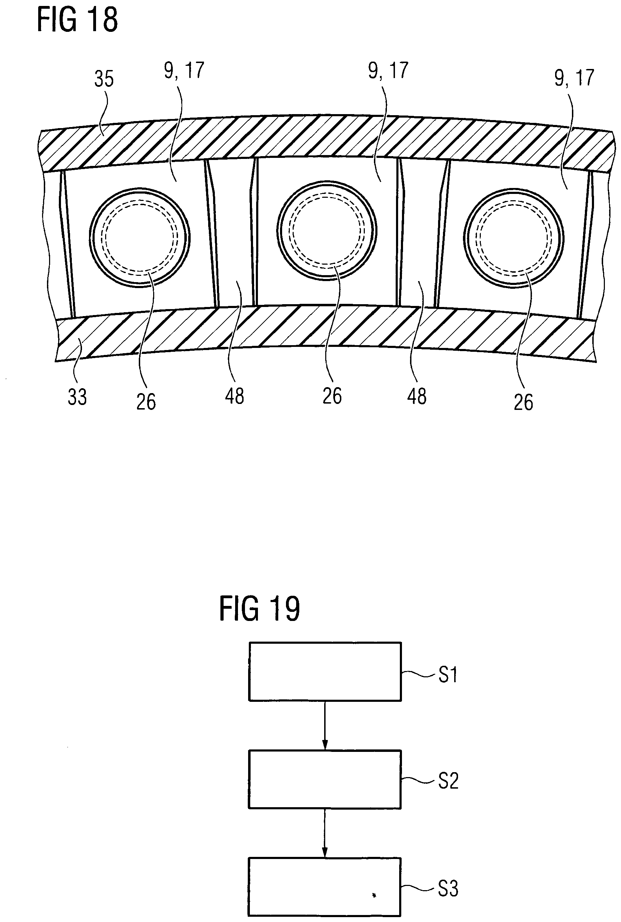

Fig. 18 illustrates a view XVIII from Fig. 4 in more detail. Spacers 48 are arranged between every pair of adjacent metal insert 17 lined up along the pressure side airfoil profile 19. The spaces 48 may be made of a non-metal material, for example a pultruded fiber material.

Fig. 19 shows a flowchart of a method according to an embodiment.

In step S1, the metal insert 16 is attached to the inboard section 7. In step S2, the metal insert 17 is attached to the outboard section 8. In step S3, the metal inserts 16, 17 are connected to each other by tightening the screw 24 from outside of the blade 3.

The inboard section 7 (preferably made of a fiber material) including the metal insert 16 may be molded separately from the outboard section 8 (preferably made of a fiber material) including the metal insert 17. Once cured, the metal insert 16, 17, and thereby the inboard and outboard section 7, 8, are screwed to each other.

Although the present invention has been described in accordance with preferred embodiments, it is obvious for the person skilled in the art that modifications are possible in all embodiments.

## Claims

1. A blade (3) for a wind turbine (1), comprising:
an inboard section (7);
an outboard section (8); and
joints (9) connecting the inboard section (7) and the outboard section (8) to each other, each joint (9) including:
a first insert (16) attached to the inboard section (7) ;
a second insert (17) attached to the outboard section (8), the first and second metal insert (16, 17) defining together a convex shape away from the blade (3) when seen in a cross-section along the lengthwise direction (11) of the blade (3); and
a threaded connection means (24) connecting the first and second metal insert (16, 17) to each other, the threaded connection means (24) being configured to be tightened from outside of the blade (3).

2. The blade according to claim 1, wherein the first and/or second insert comprises or consists of metal and/or wherein the first insert (16) is sandwiched between an inner and outer layer (32, 34) of the inboard section (7) and/or wherein the second insert (17) is sandwiched between an inner and outer layer (33, 35) of the outboard section (8).

3. The blade according to claim 2, wherein the inner layers (32, 33) of the inboard and outboard sections (7, 8) extend along a straight line and/or wherein the outer layers (34, 35) of the inboard and outboard sections (7, 8) extend along a curve.

4. The blade according to one of claims 1 - 3, wherein the inboard or outboard section (7, 8) has an opening (37) on its outside surface (30) for accessing the threaded connection means (24) for tightening the same.

5. The blade according to one of claims 1 - 4, wherein the threaded connection means (24) is a screw or a nut and/or wherein one of the first and second insert (16, 17) has a through-hole and/or the other one has a threaded hole or a stud.

6. The blade according to one of claims 1 - 5, wherein the threaded connections means (24) is directly connected to the first and second insert (16, 17).

7. The blade according to one of claims 1 - 6, wherein the first and second insert (16, 17) abut in the lengthwise direction (11) of the blade (3).

8. The blade according to one of claims 1 - 7, having a blade length (1), wherein the joint is arranged in the outermost 70%, 50% or 30% of the blade length (l).

9. The blade according to one of claims 1 - 8, comprising further joints (9'), each further joint (9') including:
a third insert (16') attached to the inboard section (7) opposite the first insert (16);
a fourth insert (17') attached to the outboard section (8) opposite the second insert (17), the third and fourth insert (16', 17') defining together a convex shape towards the blade (3) when seen in a cross-section along the lengthwise direction (11) of the blade (3); and
a threaded connection means (24') connecting the third and fourth insert (17) to each other, the threaded connection means (24) being configured to be tightened from inside (36) of the blade (2).

10. The blade according to one of claims 1 - 8, wherein the first and second insert (16, 17) abut each other forming an angle (α) in between in an untightened state of the threaded connection means (24).

11. The blade according to one of claims 1 - 10, wherein a parting plane (10) of the inboard and outboard section (7, 8) at the joint (9) runs through or is adjacent to a rib (46, 47) reinforcing the inboard and/or outboard section (7, 8).

12. The blade according to one of claims 1 - 11, wherein respective threaded connecting means (24, 24') of the joints (9, 9') are tightened from opposite sides of a parting plane (10) at the joints (9, 9'), or from the same side.

13. The blade according to one of claims 1 - 12, wherein multiple first and/or second inserts (16, 17) are arranged side by side along the airfoil profile (19, 40) of the inboard and outboard section (7, 8), wherein preferably non-metal spacers (48) are arranged between each pair of adjacent first and/or second inserts (16, 17).

14. A wind turbine (1) comprising a blade (3) according to one of claims 1 - 13.

15. A method for manufacturing a blade (3) according to one of the claims 1 - 13 or a wind turbine (1) according to claim 14, comprising the steps:
a) attaching (S1) the first insert (16) to the inboard section (7);
b) attaching (S2) the second insert (17) to the outboard section (8); and
c) connecting the first and second insert (16, 17) to each other by tightening the threaded connection means (24) from outside of the blade (3).
